# EUROPÄISCHE PATENTSCHRIFT

(11) **EP 0 599 106 B1**
(45) Veröffentlichungstag und Bekanntmachung des Hinweises auf die Patenterteilung: **27.12.1996**
(21) Anmeldenummer: 93117790.1
(22) Anmeldetag: 03.11.1993
(51) Int. Cl.: C04B 41/86, C04B 41/89, C23D 5/04, C03C 17/34

(54) **Verfahren zum Glasieren von nicht-metallischen Substraten**
Method of glazing non-metallic sustrates
Méthode pour le glaçage des substrats non-métalliques

(30) Priorität: 25.11.1992 DE 4239541
(43) Veröffentlichungstag der Anmeldung: 01.06.1994
(73) Patentinhaber: CERDEC AKTIENGESELLSCHAFT KERAMISCHE FARBEN, D-60327 Frankfurt (DE)
(72) Erfinder: Kiss, Akos, Dr., D-63457 Hanau (DE); Ludwig, Stephan, D-63579 Freigericht (DE); Mondl, Henrike, D-65933 Frankfurt (DE); Dreher, Karlheinz, D-64287 Darmstadt (DE); Montagne, Hans, NL-2421 AC Nieuwkoop (NL)

(56) Entgegenhaltungen:
- DE-A- 2 747 858
- GB-A- 1 198 462
- US-A- 2 892 734
- DATABASE WPI Section Ch, Week 6800, Derwent Publications Ltd., London, GB; Class A, AN 68-81494P 'DECORATIVE NON-CORROSIVE FLAME-RESISTANT STRUCTURE' & JP-B-42 006 678 (ORIENTAL METAL MFG CO., LTD.) 30. Dezember 1963
- CHEMICAL ABSTRACTS, vol. 112, no. 22, 28. Mai 1990, Columbus, Ohio, US; abstract no. 203678f, N. KATO ET AL 'Method for painting metal and ceramic articles' Seite 321 & JP-A-1 208 384 (MITSUBISHI YUKA BADISCHE CO., LTD.) 22. August 1989

## Beschreibung

Die vorliegende Erfindung betrifft ein Verfahren zum Glasieren von nicht-metallischen Substraten, insbesondere aus Porzellan oder Keramik, wobei der Glasurauftrag auf das gebrannte oder ungebrannte Substrat erfolgen kann. Im erfindungsgemäßen Verfahren wird das Glasurpulver elektrostatisch auf ein mit einer wäßrigen Haftschicht versehenes Substrat aufgetragen.

Das Glasieren von nicht-metallischen Substraten, welche den Bedingungen eines Glasurbrandes standhalten, darunter zählen insbesondere Glas, Porzellan und Keramik, umfaßt die Beschichtung des Substrats mit dem glasurbildenden Material und den Glasurbrand, wobei das Glasurmaterial schmilzt bzw. sintert und eine feste Bindung mit dem Substrat eingeht. Die Einbrennbedingungen hängen in dem Fachmann bekannter Weise sowohl von dem Substrat als auch der Zusammensetzung der Glasur ab; gleichzeitig mit dem Glasurbrand kann auch der eigentliche Brand des ungebrannten oder teilweise vorgebrannten Substrats erfolgen.

Die Beschichtung des Substrats mit dem Glasurmaterial läßt sich entweder im Naßauftrag mittels Gießen, Tauchen, Spritzen, Sprenkeln und Schleudern bzw. Abwandlungen dieser Techniken oder aber in sog. Trockenverfahren durchführen. Bei den Trockenverfahren wird das glasurbildende Material in Pulver- oder Granulatform auf ein vorgeheiztes Substrat durch Sieben, Pudern oder Schütten derart aufgebracht, daß das Glasurmaterial noch während des Auftrags anschmilzt und somit auf dem Substrat haftet; dieses Verfahren läßt sich nur zum Glasieren ebener, horizontal gelagerter Substrate verwenden und erlaubt keine Dekoration vor dem eigentlichen Glasurbrand. Nicht auf das Substrat fallende Glasurpartikel lassen sich bei dieser Technik praktisch nicht zurückgewinnen, da sie an anderen Stellen der Vorrichtung zum Beschichten sintern oder schmelzen.

Gemäß einer anderen Ausführungsform des sog. Trockenverfahrens wird das glasurbildende Material, beispielsweise eine Glasfritte, auf ein naß-engobiertes oder mit einer leimartigen wäßrigen Lösung benetztes Substrat durch Sieben, Pudern oder Schütten aufgebracht und anschließend eingebrannt; auch dieses Verfahren eignet sich nur zur Glasierung ebener, waagrecht positionierter Substrate, nicht aber für unebene Artikel wie Teller und Töpfe.

Keramische Pulver und Granulate wie Glasuren, Engoben und Glasfritten lassen sich auch elektrostatisch auf keramische Oberflächen auftragen, wobei jedoch die Haftung derart gering ist, daß eine Handhabung der so behandelten Teile vor dem Sinter- und Brennprozeß praktisch nicht möglich ist, da das Pulver von dem Substrat abfällt. Um dieses Problem zu beheben wurde vorgeschlagen, die keramischen Pulver in gleicher Weise mit einer siliziumorganischen Schicht zu beschichten, wie dies im Falle der Emaillepulver für die elektrostatische Pulverbeschichtung von Metalloberflächen praktiziert wird - siehe DE-PS 37 00 702, DE-A 39 09 656, EP-A 0 382 003, EP-A 0 442 109 und EP-A 0 504 683.

Zur Beschichtung des keramischen Pulvers wird dieses mit der Organosiliziumverbindung, üblicherweise einem Polysiloxan, zunächst einem Misch- und anschließend mindestens einstündigen Temperungsprozeß bei Temperaturen bis 300 ^{o}C unterworfen. Durch diesen Beschichtungsprozeß wird das keramische Pulver oberflächlich hydrophobiert, wodurch der spezifische elektrische Widerstand erhöht wird.

Durch die genannte Beschichtung wird zwar die Haftung des durch elektrostatische Pulverbeschichtung aufgetragenen Pulvers auf der keramischen Oberfläche des Substrats verbessert, nachteilig ist jedoch der gesamte technische Aufwand, der zur Herstellung des beschichteten Pulvers erforderlich ist.

Bekannt ist auch die sog. naß-elektrostatische Glasierung - siehe K. Heberlein, Ber. Dt. Keram. Vol. 53 (1976) (2), 51 - 55. Bei diesem Verfahren werden Glasurpulver-enthaltende wäßrige Suspensionen elektrostatisch versprüht. Gegenüber vorbekannten Naß-Verfahren ist der Schlickerverbrauch zwar reduziert, dennoch muß das gesamte Glasurmaterial in an sich bekannter Weise unter Verwendung von Mahlhilfsmitteln in eine Suspension überführt werden: Dadurch wird aber die Raum-Zeit-Ausbeute gegenüber vorbekannten Naß-Verfahren nicht nennenswert verbessert, und zudem kommt es zu den bekannten Abwasserproblemen und dem hohen Energieverbrauch bei der Trocknung der naß-beschichteten Substrate.

Schließlich wird in der GB-A 1 198 462 ein Verfahren zum Beschichten eines nichtleitenden Materials mit einem Glasmaterial gelehrt, wobei auf das zu beschichtende Material zunächst eine wäßrige Elektrolytlösung als Haftschicht aufgebracht und nach dem Trocknen derselben ein pulverförmiges Glasmaterial elektrostatisch aufgesprüht wird.

Aufgabe der Erfindung war, das vorbekannte Verfahren zum Glasieren von nicht-metallischen Substraten, wobei mindestens ein Teil des Glasurpulvers in trockener Form auf das Substrat aufgebracht wird, dahingehend zu verbessern, daß beliebig geformte Substrate zuverlässig glasiert werden können; das Verfahren sollte es auch gestatten, das Glasurpulver in einer solchen Menge aufzutragen, daß dicke Glasurschichten resultieren; schließlich sollte das mit dem Glasurpulver beschichtete Substrat eine griffeste Schicht bilden, so daß das so beschichtete Substrat vor dem Glasurbrand sicher handhabbar ist, beispielsweise umgesetzt und/oder dekoriert werden kann.

Gelöst wird die Aufgabe durch ein Verfahren zum Glasieren von nicht-metallischen, glasurbrandfähigen Substraten, umfassend elektrostatischer Trockenauftrag eines Glasurpulvers auf ein mit einer wäßrigen Haftschicht versehenes Substrat, Trocknen und Einbrennen unter für das Substrat und das Glasurpulver üblichen Bedingungen, das dadurch gekennzeichnet ist, daß die wäßrige Haftschicht als Haftkomponente eine beim Einbrennen im wesentlichen rückstandsfrei verbrennbare, wasserlösliche oder wasserdispergierbare, zur Netzwerkbildung und/oder Filmbildung befähigte organische Verbindung oder eine anorganische mit dem Substrat und/oder der Glasur während des Einbrennes vernetzbare Verbindung enthält, die Gesamtkonzentration der einen oder mehreren Haftkomponenten in der wäßrigen Haftschicht im Bereich zwischen 2 und 20 Gew.-% liegt und daß in der wäßrigen Haftschicht zusätzlich mindestens eine unter den Einbrennbedingungen zur Glasbildung befähigte Komponenten aus der Reihe der Glasfritten, Engoben und Glasuren anwesend ist.

Unter den nicht-metallischen, glasurbrandfähigen Substraten werden anorganische Materialien, im wesentlichen solche auf oxidischer und/oder silikatischer Basis, verstanden, also insbesondere Glas, Porzellan und Keramik. Das erfindungsgemäße Verfahren richtet sich bevorzugt auf das Glasieren von Substraten aus Porzellan oder Keramik, wobei die Substrate in ungebrannter, vorgebrannter (geschrühter) oder gebrannter Form dem Glasierverfahren zugeführt werden können. Es ist ein besonderer Vorteil des erfindungsgemäßen Verfahrens, daß hiermit ungebrannte

Keramik sowie ungebranntes oder bisquit-gebranntes Porzellan glasiert und mittels eines einzigen Brandes in das fertig gebrannte und glasierte Substrat überführt werden können. Die jeweils erforderlichen Brennbedingungen sind der Fachwelt bekannt: Sie richten sich sowohl nach dem Substrat als auch der aufgetragenen Glasur. Üblicherweise erfolgt der Glasurbrand von Keramik im Bereich zwischen 920 und 1250 ^{o}C, der Glasurbrand von Porzellan im Bereich von 1250 bis 1440 ^{o}C.

Der elektrostatische Auftrag des Glasurpulvers auf das zuvor mit einer wäßrigen Haftschicht gleichmäßig benetzte Substrat erfolgt unter üblichen Bedingungen für den elektrostatischen Pulverauftrag: Das Glasurpulver wird in einer Vorrichtung zur Fluidisierung fluidisiert und unter Verwendung einer üblichen Elektrostatikpistole bei im allgemeinen 60 bis 100 kV und 0,1 bis 0,4 mA zerstäubt.

Überraschenderweise wurde gefunden, daß das Glasurpulver vor dem elektrostatischen Pulverauftrag nicht mit einer Organosiliziumverbindung beschichtet werden muß, wenn der elektrostatische Pulverauftrag auf die erfindungsgemäß erforderliche wäßrige Haftschicht erfolgt. Es war ferner nicht vorhersehbar, daß ein derart beschichtetes Substrat eine hohe Griffestigkeit aufweist, so daß es problemlos handhabbar ist, beispielsweise umgesetzt und/oder anderen Dekorationsprozessen zugeführt werden kann.

Es wurde festgestellt, daß es nicht möglich ist, eine gleichmäßige und annähernd ausreichend dicke Schicht Glasurpulver auf der nassen Haftschicht zu erhalten, wenn diese zwar unter Verwendung der gleichen Pistole, jedoch ohne elektrostatische Aufladung des Glasurpulvers mit diesem besprüht wird. Auch eine einfache Benetzung des zu glasierenden Substrats mit Wasser macht einen elektrostatischen Pulverauftrag nahezu unmöglich, weil die erreichbaren Schichtdicken zu gering sind und beim Brand das Glasurpulver in unerwünschter Weise "abrollt".

Unter dem trocken aufzutragenden Glasurpulver werden sowohl Glasfritten als auch der Fachwelt unter dem Begriff Glasuren und Engoben bekannte Stoffgemische verstanden - beispielhaft wird auf Ullmann's Enziclopedia of Industrial Chemistry 5. Ed. (1986) Vol. A6, Seiten 31 - 33 verwiesen. Das Glasurpulver kann auch gefärbt sein, indem es eine Farbfritte oder Farbpigmente enthält.

Überraschenderweise kommt es bei der Verwendung handelsüblicher Glasuren, welche aus Glasfritten und Tonen bestehen und deren Herstellung üblicherweise einen nassen Misch- sowie einen Trocknungsprozeß umfaßt, während des elektrostatischen Pulverauftrags zu keinen stofflichen Entmischungen. Vorzugsweise liegt der D₅₀-Wert des elektrostatisch aufzutragenden Glasurpulvers im Bereich zwischen 10 und 50 µm (gemessen nach CIlAS), jedoch lassen sich auch Glasurpulver und -granulate mit größerem mittleren Korndurchmesser elektrostatisch auftragen.

Der elektrostatische Pulverauftrag kann in üblichen für derartige Zwecke konstruierten Kabinen durchgeführt werden. Es hat sich dabei als vorteilhaft erwiesen, daß während des elektrostatischen Pulverauftrags das zu glasierende Substrat auf einer geerdeten metallischen Unterlage steht. Auf diese Weise lassen sich insbesondere kompliziert geformte Substrate problemlos glasieren.

Wie bereits erwähnt, ist es erfindungswesentlich, daß die wäßrige Haftschicht eine Haftkomponente in wirksamer Menge enthält. Eine Konzentration im Bereich bis etwa 1 %, wie sie im Stand der Technik für eine wäßrige Benetzungslösung mit leimartiger Konsistenz Anwendung findet, wird im erfindungsgemäßen Verfahren bei Abwesenheit anderer Komponenten in der wäßrigen Haftschicht als nicht ausreichend angesehen, weil einerseits hiermit nur eine geringe Schichtdicke an Glasurpulver elektrostatisch aufgetragen werden kann und andererseits die Griffestigkeit der Beschichtung sowie die Haftung zum beschichteten Scherben im allgemeinen ungenügend sind. Die aufgezeigten Nachteile lassen sich dadurch beheben, daß die Gesamtkonzentration der einen oder mehreren Haftkomponenten in der wäßrigen Haftschicht erhöht wird und im Bereich zwischen 2 und 20 Gew.-%, insbesondere zwischen 5 und 15 Gew.-%, liegt.

Gemäß einem weiteren erfindungswesentlichen Merkmal des erfindungsgemäßen Verfahrens enthält die wäßrige Haftschicht zusätzlich zu einer oder mehreren Haftkomponenten mindestens eine unter den Einbrennbedingungen zur Glasbildung befähigte Komponente, beispielsweise eine Glasfritte, eine Engobe oder eine Glasur. Vorzugsweise enthält eine derartige Haftschicht die glasbildende Komponente in üblicher Schlickerfeinheit; die Zusammensetzung dieser Komponente ist gleich oder ähnlich derjenigen des elektrostatisch aufzutragenden Glasurpulvers. Die Anwesenheit einer oder mehrerer zur Glasbildung befähigter Komponenten in der wäßrigen Haftschicht führt zu einer Reihe von Vorteilen: Die Gefahr des "Abrollens" oder anderer Glasurfehler während des Glasurbrandes wird vermindert; die Griffestigkeit der Beschichtung wird erhöht, so daß Handhabungsprobleme des ungebrannten, beschichteten Substrats vermieden werden; die Menge an elektrostatisch aufzutragendem Glasurpulver kann erhöht werden, so daß auch dicke Glasurschichten erhältlich sind. Vorzugsweise enthält die wäßrige Haftschicht außer der zuvor genannten Menge Haftkomponente(n) insgesamt 10 bis 60 Gew.-%, insbesondere 20 bis 50 Gew.-%, einer oder mehrerer zur Glasbildung befähigten Komponenten. Eine geeignete wäßrige Haftschicht besteht somit aus Wasser, einer oder mehreren Haftkomponenten sowie einer oder mehreren zur Glasbildung befähigter Komponenten. Bei Bedarf kann jedoch die wäßrige Haftschicht in geringer Menge, üblicherweise insgesamt weniger als 5 Gew.-%, Verarbeitungshilfsstoffe, beispielsweise übliche Mahlhilfsstoffe, Dispergiermittel sowie Stoffe zur Einstellung der rheologischen Eigenschaften der wäßrigen Haftschicht enthalten.

Eine weitere Klasse von Hilfsstoffen, welche in der wäßrigen Haftschicht enthalten sein können, sind leitfähigkeiterhöhende wasserlösliche Salze. Bevorzugt werden solche wasserlöslichen Salze, welche in der Keramik-Industrie als Flußmittel Verwendung finden, wie insbesondere Chloride und Acetate der Alkali- und Erdalkalimetalle.

Als Haftkomponente der wäßrigen Haftschicht eignen sich sowohl organische als auch anorganische Substanzen, welche wasserlöslich oder wasserdispergierbar sind und das elektrostatisch aufgetragene Glasurpulver wirksam zu binden vermögen. Organische Haftkomponenten müssen während des Einbrennens, und zwar vor der Ausbildung einer geschlossenen Glasurschicht, im wesentlichen rückstandsfrei verbrennen. Unter "im wesentlichen" wird verstanden, daß die Haftkomponente im Falle eines Verbrennungsrückstands ausschließlich glasurverträgliche Bestandteile, wie z. B. Alkalimetalloxid oder SiO₂, liefert. Die Wasserlöslichkeit carboxylgruppenhaltiger Haftkomponenten läßt sich durch Alkalisalzbildung erhöhen; hieraus resultiert als Verbrennungsrückstand Alkalimetalloxid. Es wird angenommen, daß die Wirkung der Haftkomponente auf einer Netzwerkbildung, beispielsweise durch Wasserstoffbrückenbindung, und/oder Filmbildung von Haftkomponenten auf polymerer Basis beruht.

Organische Haftkomponenten lassen sich beispielsweise aus den nachfolgenden Stoffklassen auswählen:
(a) Natürliche und synthetisch modifizierte Polysaccharide, beispielsweise zum Zwecke der Erhöhung der Wasserlöslichkeit, modifizierte Stärke und Cellulose, insbesondere Carboxyalkylcellulose und Hydroxyalkylcellulose, ferner Pektinate und Alginate;
(b) mehrwertige niedermolekulare Alkohole, wie Sorbit und Hexit, aber auch Mono- und Disaccharide; höher molekulare Glycole, wie Polyethylenglycole, Polyether- und Polyesterpolyole;
(c) wasserlösliche, durch Polymerisation hergestellte Polymere oder Copolymere mit Hydroxyl- und/oder Carboxylgruppen oder Carbonamid- oder Pyrrolidongruppen; zu diesen Stoffklassen zählen beispielsweise Polyacrylsäuren, Polyvinylalkohol, Polyvinylpyrrolidon;
(d) filmbildende Polymere und Copolymere soweit sie ausreichend wasserdispergierbar sind; beispielhaft genannt werden Acrylat- und Methacrylatpolymere und -copolymere, Acrylat/Acrylnitril-Copolymere, Ethylen/Vinylacetat-Copolymere, Styrol/AcrylatCopolymere;
(e) wasserlösliche oder -dispergierbare Polyurethane.

Unter den anorganischen Haftkomponenten sind solche bevorzugt, welche während des Einbrennens mit der Glasur und/oder dem Substrat vernetzen; besonders bevorzugt sind Wasserglas, wasserlösliche Borate sowie Borsäure. Als Haftkomponente geeignet sind ferner wasserdispergierbare Polysiloxane; während des Glasurbrandes verbrennt der organische Anteil dieser Haftkomponente, während der anorganische Anteil mit dem Substrat und/oder der Glasurschicht vernetzt.

Um das Glasurpulver problemlos mittels einer Elektrostatik-Sprühpistole auftragen zu können, muß das Glasurpulver ausreichend fluidisiert sein. Sofern erforderlich, kann die Fluidisierung des Glasurpulvers dadurch verbessert werden, daß diesem ein pyrogen hergestelltes Oxid aus der Reihe Kieselsäure, Titandioxid und Aluminiumoxid, vorzugsweise Titandioxid, in einer Menge von 0,1 bis 5 Gew.-%, insbesondere 0,5 bis 3 Gew.-%, zugesetzt wird.

Üblicherweise wird im erfindungsgemäßen Verfahren die wäßrige Haftschicht in einer Menge von 1 bis 10 g/dm², vorzugsweise 3 bis 8 g/dm², mittels einer üblichen Naß-Beschichtungstechnik etwa mittels einer Sprühpistole auf das Substrat aufgetragen; in die nasse Haftschicht wird anschließend das Glasurpulver elektrostatisch in einer Menge von im allgemeinen mindestens 5 g/dm², vorzugsweise 5 bis 12 g/dm², aufgetragen. Das so beschichtete Substrat ist griffest und läßt sich in ungetrocknetem oder getrocknetem Zustand sicher handhaben und vor dem Glasurbrand mittels üblicher Dekorationstechniken, etwa der Siebdruck- und Abziehbildtechnik, dekorieren.

Die wesentlichen Vorteile des erfindungsgemäßen Verfahrens bestehen darin, daß das Glasurpulver, ohne dieses zuvor zu beschichten, elektrostatisch auf das zu glasierende, mit der erfindungsgemäß erforderlichen wäßrigen Haftschicht versehene Substrat aufgebracht werden kann. Eine derart erzeugte Beschichtung weist eine hohe Griffestigkeit auf, welche ein problemloses Handhaben sicherstellt. Das nicht auf dem zu glasierenden Substrat abgeschiedene Glasurpulver kann quantitativ recycliert werden. Zwar ist es im Rahmen der bevorzugten Ausführungsform des Verfahrens, worin eine zur Glasbildung befähigte Komponente in der wäßrigen Haftschicht enthalten ist, notwendig, diese Komponente in üblicher Weise in die eine Haftkomponente enthaltende wäßrige Phase einzuarbeiten, jedoch muß nicht das gesamte Glasurpulver in einen Schlicker überführt werden: Gegenüber Naß-Glasierverfahren wird auf diese Weise der für die Trocknung erforderliche Energieaufwand reduziert.

Während in dem vorbekannten Glasierverfahren, worin Glasurpulver auf ein naß-engobiertes Substrat aufgesiebt wird, nur waagrecht positionierte Platten glasiert werden können, ist es mit dem erfindungsgemäßen Verfahren möglich, beliebig geformte Substrate zu glasieren, wobei die Glasur transparent, weiß oder anderweitig gefärbt sein kann.

Anhand der folgenden Beispiele wird das Verfahren näher erläutert.

### Beispiele 1 bis 9

Die Zusammensetzung der wäßrigen Haftschichten folgt aus Tabelle 1. Die Herstellung erfolgte durch Mahlen in einer Kugelmühle.

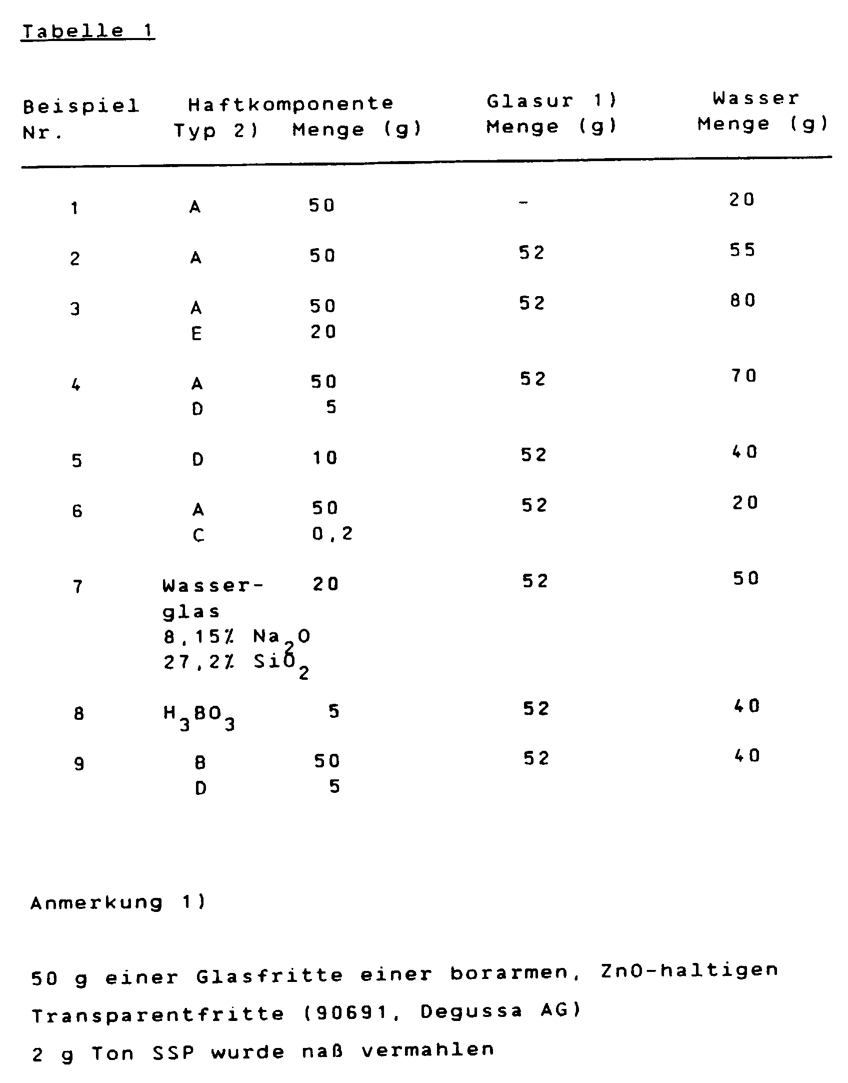

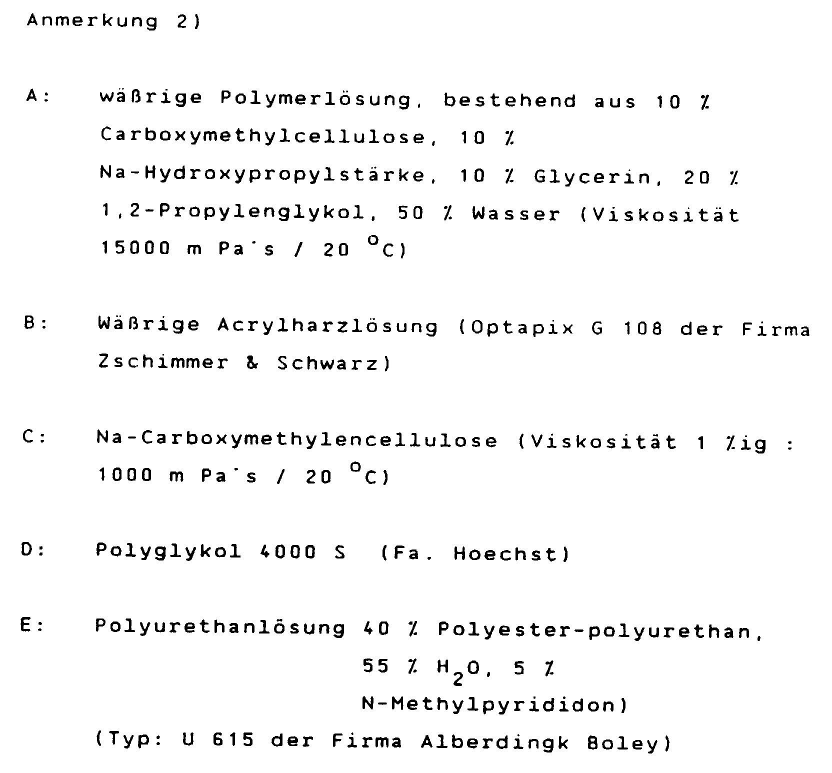

Die Zusammensetzung der Beispiele 2 bis 4 weisen Viskositäten von 45,3 , 49,0 bzw. 62,5 m Pa^{.}s auf und sind für das Glasieren waagrechter und senkrechter Flächen geeignet. Die Zusammensetzung gemäß Beispiel 5 mit einer Viskosität von 10,1 m Pa^{.}s eignet sich eher für waagrechte als senkrechte Flächen.

Nach dem Aufsprühen der Haftschichtlösung bzw. -suspension auf einen ungebrannten Keramikscherben wird als Glasurpulver eine im wesentlichen bleifreie Zirkonfritte (91914, Degussa AG) elektrostatisch aufgesprüht, 70 kV, 0,18 mA, 0,8 bar Zerstäuberdruck, 3,0 bar Förderdruck; der elektrostatische Pulverauftrag erfolgte mittels einer handeslüblichen Pulversprühanlage (Firma Wagner ESB, Meersburg).

Die Auftragsmengen an wäßriger Haftschicht und Glasurpulver sind Tabelle 2 zu entnehmen. Getrocknet wurde bei 110 °C, eingebrannt im Schnellbrand (SB) 40' bei 1120 °C bzw. Langzeitbrand (LB) mit einer Aufheizrate von 200 K/h und 30' Haltezeit bei 1080 °C. Tabelle 2 enthält zusätzlich Anmerkungen zur Griffestigkeit und Eigenschaften der Glasur.

**Tabelle 2**

| Beispiel Nr. | Menge Haftschicht g/dm² | | Menge Glasurpulver g/dm² | | Anmerkungen zur Grifffestigkeit (GF) und Glasurqualität (GQ) | |
|---|---|---|---|---|---|---|
| | a | b | a | b | GF | GQ |
| 1 | 3 | | 6 | | mäßig | gewellte und porige Oberfläche |
| 2 | 4,5 | | 8 | | mäßig | porige |
| 3 | 5 | | 6,5 | | gut | glatte |
| 4 | 3 | 2,5 | 5 | 5 | gut | glatte |
| 5 | 6 | 6 | 8 | 6 | gut | glatte |
| 6 | 5 | | 5 | | gut | glatte |
| 7 | 7 | | 7 | | gut | porige |
| 8 | 9 | | 6 | | gut | porige |
| 9 | 5 | 4 | 8 | 6 | sehr gut | glatt und porenfrei |

| | | | | | | |
|---|---|---|---|---|---|---|
| a) Auftrag auf Rohscherben | | | | | | |
| b) Auftrag auf Biskuitscherben | | | | | | |

### Beispiele 10 und 11

Auf ungebrannte Hohlware aus weißer Steingutmasse wurde die wäßrige Haftschichtsuspension gemäß den Beispielen 2, 3 und aufgesprüht; anschließend wurde als Glasurpulver, wie in den Beispielen 1-9, die im wesentlichen bleifreie Zirkonfritte (91914, Degussa AG) elektrostatisch aufgetragen und anschließend getrocknet und gebrannt, 1080 °C.
(Aufheizgeschwindigkeit 150 °C/h, Haltezeit 30 min). Die Einsatzmenge und Ergebnisse folgen aus Tabelle 3.

**Tabelle 3**

| Beispiel Nr. | Haftkomponente Zusammensetzung gemäß Beisp. (Tabelle 1) | Haftschicht *) Menge (g/dm²) (naß) | Glasurpulver *) Typ Menge (g/dm) | Bemerkungen |
|---|---|---|---|---|
| 10 | 4 | 5,5 - 6,5 | 8 - 10 | grifffest |
| 11 | 9 | 5,5 - 6,5 | 8 - 10 | besonders hohe Grifffestigkeit |

| | | | | |
|---|---|---|---|---|
| *) Grenzwerte aus der Beschichtung von 5 Stück der Hohlware. | | | | |

## Patentansprüche

1. Verfahren zum Glasieren von nicht-metallischen, glasurbrandfähigen Substraten, umfassend elektrostatischer Trockenauftrag eines Glasurpulvers auf ein mit einer wäßrigen Haftschicht versehenes Substrat, Trocknen und Einbrennen unter für das Substrat und das Glasurpulver üblichen Bedingungen,
dadurch gekennzeichnet,
daß die wäßrige Haftschicht als Haftkomponente eine beim Einbrennen im wesentlichen rückstandsfrei verbrennbare, wasserlösliche oder wasserdispergierbare, zur Netzwerkbildung und/oder Filmbildung befähigte organische Verbindung oder eine anorganische mit dem Substrat und/oder der Glasur während des Einbrennes vernetzbare Verbindung enthält, die Gesamtkonzentration der einen oder mehreren Haftkomponenten in der wäßrigen Haftschicht im Bereich zwischen 2 und 20 Gew.-% liegt und daß in der wäßrigen Haftschicht zusätzlich mindestens eine unter den Einbrennbedingungen zur Glasbildung befähigte Komponenten aus der Reihe der Glasfritten, Engoben und Glasuren anwesend ist.

2. Verfahren nach Anspruch 1,
dadurch gekennzeichnet,
daß das zu glasierende Substrat aus Porzellan oder Keramik, welche gebrannt oder ungebrannt sein können, besteht.

3. Verfahren nach Anspruch 1 oder 2,
dadurch gekennzeichnet,
daß die wäßrige Haftschicht 2 bis 20 Gew.-% Haftkomponenten und 10 bis 60 Gew.-% zur Glasbildung befähigte Komponenten enthält.

4. Verfahren nach einem der Ansprüche 1 bis 3,
dadurch gekennzeichnet,
daß die wäßrige Haftschicht insgesamt 5 bis 15 Gew.-% einer oder mehrerer Haftkomponenten und insgesamt 20 bis 50 Cew.-% einer oder mehrerer zur Glasbildung befähigter Komponenten enthält.

5. Verfahren nach einem der Ansprüche 1 bis 4,
dadurch gekennzeichnet,
daß die Haftkomponente ausgewählt ist aus der Reihe: natürliche oder synthetisch modifizierte Polysaccharide, insbesondere Carboxyalkylcellulose und Hydroxyalkylcellulose; Polyole, insbesondere Monosaccaride und Polyethylenglykol;
wasserlösliche, durch Polymerisation hergestellte Polymere oder Copolymere mit Hydroxyl- und/oder Carboxylgruppen oder Carbonamid- oder Pyrrolidongruppen; wasserdispergierbare filmbildende Polymere und Copolymere, insbesondere Acrylat- und Methacrylatpolymere und -copolymere, Acrylat/-Acrylnitril-Copolymere, Ethylen/Vinylacetatcopolymere. Styrol/Acrylat-Copolymere;
Polyurethane.

6. Verfahren nach einem der Ansprüche 1 bis 5,
dadurch gekennzeichnet,
daß die zur Glasbildung befähigte Komponente der Haftschicht im wesentlichen die gleiche Zusammensetzung aufweist wie jene des trocken aufgetragenen Glasurpulvers.

7. Verfahren nach einem der Ansprüche 1 bis 6,
dadurch gekennzeichnet,
daß die wäßrige Haftschicht zusätzlich ein leitfähigkeiterhöhendes wasserlösliches Salz, insbesondere ein Chlorid oder Acetat der Alkali- oder Erdalkalimetalle, enthält.

8. Verfahren nach einem der Ansprüche 1 bis 7,
dadurch gekennzeichnet,
daß das zu glasierende Substrat während des elektrostatischen Pulverauftrags unter Verwendung einer üblichen Elektrostatikpistole und einer Spannung der Koronarelektrode von 60 bis 100 kV auf einer geerdeten metallischen Unterlage steht.

9. Verfahren nach einem der Ansprüche 1 bis 8,
dadurch gekennzeichnet,
daß dem Glasurpulver zum Zwecke der verbesserten Fluidisierung vor dem elektrostatischen Auftrag ein pyrogen hergestelltes Oxid aus der Reihe Kieselsäure, Titandioxid, Aluminiumoxid, vorzugsweise Titandioxid, in einer Menge von 0,1 bis 5 Gew.-% zugesetzt wird.

10. Verfahren nach einem der Ansprüche 1 bis 9,
dadurch gekennzeichnet,
daß die Haftschicht in einer Menge von 1 bis 10 g/dm² und Glasurpulver in einer Menge von mindestens 5 g/dm² aufgetragen wird.

## Claims

1. Process for glazing non-metallic substrates with a glaze capable of being fired, comprising an electrostatic dry coating of a glazing powder to a substrate provided with an aqueous adhesive layer, drying and firing under conditions which are conventional for the substrate and the glazing powder, characterised in that the aqueous adhesive layer contains as adhesion component an organic compound which during firing is combustible substantially without residue, is water-soluble or dispersible in water, is capable of forming a network and/or a film or an inorganic compound which is cross-linkable with the substrate and/or the glaze during firing, the total concentration of the one or more adhesive components in the aqueous adhesive coating being in the range between 2 and 20 %-weight, and in that in the aqueous adhesive layer additionally at least one component capable of forming a glaze in firing conditions from the series of glass frits, engobes and glazes is present.

2. Process according to claim 1, characterised in that the substrate to be glazed consists of porcelain or ceramic which may be fired or non-fired.

3. Process according to claim 1 or 2, characterised in that the aqueous adhesive coating contains 2 to 20 %-weight adhesive components and 10 to 60 %-weight components capable of forming a glaze.

4. Process according to one of claims 1 to 3, characterised in that the aqueous adhesive coating contains in all 5 to 15 %-weight adhesive components and in all 20 to 50 %-weight of one or more components capable of forming a glaze.

5. Process according to one of claims 1 to 4, characterised in that the adhesive component is selected from the series: natural or synthetically modified polysaccharides, in particular carboxyalkylcellulose and hydroxyalkylcellulose; polyols, in particular monosaccharides and polyethylene glycol; water-soluble polymers or copolymers manufactured by polymerisation and comprising hydroxyl and/or carboxyl groups or carbonamide or pyrrolidone groups; water-dispersible film-forming polymers and copolymers, in particular acrylate and methacrylate polymers and copolymers, acrylate/acrylonitrile copolymers, ethylene/vinyl acetate copolymers, styrene/acrylate copolymers; polyurethanes.

6. Process according to one of claims 1 to 5, characterised in that the component capable of forming a glaze of the adhesive coating has substantially the same composition as that of the dry-applied glazing powder.

7. Process according to one of claims 1 to 6, characterised in that the aqueous adhesive layer additionally contains a conductivity-increasing water-soluble salt, in particular a chloride or acetate of the alkaline or earth alkaline metals.

8. Process according to one of claims 1 to 7, characterised in that the substrate to be glazed during electrostatic powder application is subject to the use of a conventional electrostatic pistol and a voltage of the coronary electrode of 60 to 100 kV on an earthed metal support.

9. Process according to one of claims 1 to 8, characterised in that to the glazing powder are added, for the purpose of improved fluidisation before electrostatic coating, a pyrogenically produced oxide from the series: silicic acid, titanium dioxide, aluminium oxide, preferably titanium dioxide, in a quantity of 0.1 to 5 %-weight.

10. Process according to one of claims 1 to 9, characterised in that the adhesive coating is applied in a quantity of 1 to 10 g/dm² and glazing powder in a quantity of at least 5 g/dm².

## Revendications

1. Procédé de glaçage de substrats aptes à la cuisson de glaçure, non métalliques, comprenant un dépôt à sec électrostatique d'une poudre de glaçure sur un substrat muni d'une couche d'adhérence aqueuse, séchage et cuisson dans les conditions habituelles pour le substrat et la poudre de glaçure,
caractérisé en ce que
la couche d'adhérence aqueuse contient comme composant d'adhérence un composé organique, permettant la formation de film et/ou la formation d'un réseau, soluble ou dispersible dans l'eau, calcinable sans laisser sensiblement de résidu à la cuisson ou un composé minéral réticulable avec le substrat et/ou la glaçure pendant la cuisson, la concentration globale d'un ou de plusieurs composants d'adhérence dans la couche d'adhérence aqueuse est comprise entre 2 et 20 % en poids et en ce que dans la couche d'adhérence aqueuse se trouve en plus au moins un composant permettant de former un verre dans les conditions de cuisson, de la série des frittes de verre, engobes et glaçures.

2. Procédé selon la revendication 1,
caractérisé en ce que
le substrat à glacer est en porcelaine ou céramique, qui peut être crue ou cuite.

3. Procédé selon la revendication 1 ou 2,
caractérisé en ce que
la couche d'adhérence aqueuse contient 2 à 20 % en poids de composants d'adhérence et 10 à 60 % en poids de composants pouvant former du verre.

4. Procédé selon l'une des revendications 1 à 3,
caractérisé en ce que
la couche d'adhérence aqueuse contient globalement 5 à 15 % en poids d'un ou plusieurs composants d'adhérence et globalement 20 à 50 % en poids d'un ou plusieurs composants pouvant former du verre.

5. Procédé selon l'une des revendications 1 à 4,
caractérisé en ce que
on choisit le composant d'adhérence dans la série des polysaccharides naturels ou modifiés synthétiquement, notamment de la carboxyalkylcellulose et de l'hydroxyalkylcellulose ; des polyols, notamment des monosaccharides et des polyéthylèneglycol ; des polymères ou copolymères à groupes hydroxyle et/ou carboxyle ou des groupes carbonamides ou pyrolidone ; des polymères et copolymères filmogènes dispersibles dans l'eau, notamment des polymères et copolymères acrylates et méthacrylates, des copolymères acrylate/acrylonitrile, des copolymères éthylène/acétate de vinyle, des copolymères styrène/acrylate, des polyuréthannes.

6. Procédé selon l'une des revendications 1 à 5,
caractérisé en ce que
le composant pouvant former du verre de la couche d'adhérence a essentiellement la même composition que celle de la poudre de glaçure déposée à sec.

7. Procédé selon l'une des revendications 1 à 6,
caractérisé en ce que
la couche d'adhérence aqueuse contient en plus un sel soluble dans l'eau augmentant la conductibilité, notamment un chlorure ou acétate de métal alcalin ou alcalino-terreux.

8. Procédé selon l'une des revendications 1 à 7,
caractérisé en ce que
le substrat à glacer est pLacé sur une base métallique, mise à la terre, pendant le dépôt de poudre électrostatique en utilisant un pistolet électrostatique usuel et une tension de l'électrode corona de 60 à 100 kV.

9. Procédé selon l'une des revendications 1 à 8,
caractérisé en ce que pour améliorer la fluidification avant le dépôt électrostatique on ajoute à la poudre de glaçure un oxyde préparé par voie pyrogénée de la série de l'acide silicique, dioxyde de titane, oxyde d'aluminium, de préférence dioxyde de titane, en une quantité de 0,1 à 5 % en poids.

10. Procédé selon l'une des revendications 1 à 9,
caractérisé en ce que
on dépose la couche d'adhérence en une quantité de 1 à 10 g/dm² et de la poudre de glaçure en une quantité d'au moins 5 g/dm².
